# FASCICULE DE BREVET EUROPEEN

(11) **EP 2 992 797 B1**
(45) Date de publication et mention de la délivrance du brevet: **15.03.2017**
(21) Numéro de dépôt: 15177500.4
(22) Date de dépôt: 20.07.2015
(51) Int. Cl.: A47K 10/06

(54) **SÈCHE-SERVIETTES POURVU D'UN DISPOSITIF DE FIXATION MURALE**
HANDTUCHTROCKNER MIT EINER WANDBEFESTIGUNGSVORRICHTUNG
TOWEL DRIER PROVIDED WITH A WALL MOUNTING DEVICE

(30) Priorité: 05.09.2014 FR 1458330
(43) Date de publication de la demande: 09.03.2016
(73) Titulaire: Texas De France, 13854 Aix en Provence (FR)
(72) Inventeur: BLOUIN, Philippe, 13510 EGUILLES (FR); VIENNET, Raphaël, 13100 Aix-En-Provence (FR)
(74) Mandataire: Roman, Alexis

(56) Documents cités:
- EP-A2- 2 224 177
- DE-U1- 29 600 613
- FR-A1- 2 842 285
- US-A1- 2012 211 481

## Description

### Domaine technique de l'invention.

L'invention a pour objet un sèche-serviettes pourvu d'un dispositif de fixation murale.

Elle concerne le domaine technique des appareils de chauffage destinés à être fixés contre un mur, et plus particulièrement celui des sèche-serviettes.

### État de la technique.

Les sèche-serviettes comportent généralement au moins un montant vertical sur lequel sont installées des barres de séchage, lequel montant est fixé contre un mur. Le montant doit être écarté du mur afin de laisser un espace de 5 cm à 10 cm entre ledit mur et les barres de séchage pour le passage des serviettes. Pour cela, ils sont équipés de fixations murales les écartant du mur.

Les fixations traditionnelles de sèche-serviettes ont un emplacement fixe, et elles sont vissées dans le mur. De telles fixations sont par exemple décrites dans le document brevet WO2011/130786 (AVENIR FUTUR DESIGN). L'emplacement des trous de fixation dans le mur est donc imposé par la position souhaitée du sèche-serviettes. De plus, si le sèche-serviettes s'avère trop haut ou trop bas à l'usage, il ne peut pas être déplacé sans avoir à percer de nouveaux trous de fixation.

Le document brevet EP 2.224.177 (KERMI), qui est considéré de former l'état de la technique antérieure le plus proche, divulgue un radiateur électrique pourvu d'un dispositif de fixation murale permettant d'ajuster la position verticale dudit radiateur par rapport au mur sur lequel il est destiné à être fixé. Plus particulièrement, c'est la fixation murale qui a une possibilité de débattement vertical, ce débattement étant autorisé par un mécanisme complexe de coulisseau. Ce débattement est toutefois très court de sorte que les possibilités de réglage de la hauteur du radiateur sont, en pratique, limitées.

L'invention vise à remédier à cet état des choses. En particulier, un objectif de l'invention est de proposer un dispositif de fixation murale permettant d'adapter facilement et rapidement la position du sèche-serviettes par rapport à des fixations murales existantes.

Un autre objectif de l'invention est de proposer un dispositif de fixation murale dont la conception est simple, peu onéreuse, et dont la mise en place est aisée.

### Divulgation de l'invention.

La solution proposée par l'invention est un sèche-serviettes comportant au moins un montant vertical sur lequel sont fixées des barres de séchage, lequel montant est pourvu d'un dispositif de fixation murale adapté pour écarter ledit sèche-serviettes du mur sur lequel il est destiné à être fixé et adapté pour régler la hauteur dudit sèche-serviettes par rapport audit mur.

Ce sèche-serviettes est remarquable en ce que le dispositif de fixation murale comprend : - au moins une glissière longitudinale verticale intégrée dans le montant ; - au moins une fixation murale adaptée pour se déplacer verticalement le long de la glissière de manière à régler la position verticale du sèche-serviettes ; - un moyen pour bloquer en position la fixation murale dans la glissière.

L'utilisation d'une telle glissière permet maintenant de déplacer l'emplacement des fixations murales le long du montant. Ainsi, les trous de fixation peuvent être placés à des endroits particulièrement favorables à leur perçage, comme par exemple dans des joints de carrelage, la position du sèche-serviettes étant réglable par rapport à ces trous. L'utilisateur peut en outre facilement et rapidement ajuster la position verticale, c'est-à-dire la hauteur, de son sèche-serviettes sans avoir à percer de nouveaux trous.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, de demandes de brevets divisionnaires :
- Selon un premier mode avantageux de réalisation, la glissière présente deux parois latérales ; - la fixation murale comprend une patte de fixation adaptée pour se déplacer verticalement le long de la glissière ; - le moyen de blocage se présente sous la forme d'au moins une vis, qui coopère avec la patte de fixation, et qui est adaptée pour se loger dans la glissière afin de maintenir en position ladite patte de fixation sur ladite glissière, les filets de ladite vis étant en prise directe avec les parois latérales de ladite glissière.
- La vis est avantageusement une vis auto-taraudeuse.
- La glissière s'étend préférentiellement sur toute la longueur du montant.
- Avantageusement, la fixation murale comprend également un crochet de fixation adapté pour se fixer contre un mur, la patte de fixation s'assemblant sur ledit crochet.
- La patte de fixation comprend avantageusement une fente adaptée pour coopérer avec une fente complémentaire réalisée sur le crochet, de manière à bloquer les mouvements transversaux et latéraux de ladite patte par rapport audit crochet.
- Un cache est préférentiellement positionné autour de la patte de fixation qui est assemblée sur le crochet, lequel cache est adapté pour bloquer en position ladite patte par rapport audit crochet.
- Le cache est préférentiellement formé de deux demi-coques qui se verrouillent l'une sur l'autre.
- Le sèche-serviettes peut comporter au moins un accessoire adapté pour se déplacer verticalement le long de la glissière, au moins une vis, qui coopère avec cet accessoire, est adaptée pour se loger dans la glissière afin de maintenir en position ledit accessoire sur ladite glissière, les filets de ladite vis étant en prise directe avec les parois latérales de ladite glissière.
- Selon un second mode de réalisation, la glissière présente un rail de guidage longitudinal vertical dans lequel un coulisseau est monté mobile en translation ; - la fixation murale comprend un élément de fixation adaptée pour coopérer avec le coulisseau ; - le moyen de blocage se présente sous la forme d'au moins une vis qui coopère avec cet élément de fixation, et qui est adaptée pour se visser dans le coulisseau afin de maintenir en position l'élément de fixation sur la glissière.
- Le montant et la glissière forment préférentiellement une pièce monobloc moulée ou extrudée.
- Le sèche-serviettes comprend préférentiellement deux montants verticaux entre lesquels sont fixées les barres de séchage, chaque montant étant pourvu d'un dispositif de fixation murale, chaque dispositif de fixation murale comprenant : - une glissière longitudinale intégrée dans le montant auquel ledit dispositif est associé ; - deux fixations murales adaptées pour se déplacer verticalement dans la glissière ; - des moyens pour bloquer en position chaque fixation murale dans ladite glissière.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une vue en perspective arrière d'un sèche-serviettes conforme à l'invention ; les fixations murales étant montées ;
- la figure 2 est une vue éclatée d'une des fixations murales illustrées sur la figure 1 ;
- la figure 3 est une vue perspective d'un montant seul utilisé dans le sèche-serviettes de la figure 1 ;
- la figure 4a est une vue en coupe agrandie selon A-A du montant de la figure 3 ;
- la figure 4b montre le montant de la figure 4a, le dispositif de fixation murale étant installé sur ledit montant ;
- la figure 5 est une vue éclatée d'une fixation murale conforme à l'invention ;
- les figures 6a à 6c illustrent les différentes étapes d'assemblage de la fixation murale de la figure 5 ;
- la figure 7 est une vue en perspective arrière d'un sèche-serviettes dans une variante de réalisation ; les fixations murales étant montées ;
- la figure 8 est une vue éclatée d'une des fixations murales illustrées sur la figure 7;
- la figure 9 est une vue perspective d'un montant seul utilisé dans le sèche-serviettes de la figure 7 ;
- la figure 10a est une vue en coupe agrandie selon B-B du montant de la figure 9;
- la figure 10b montre le montant de la figure 10a, le dispositif de fixation murale étant installé sur ledit montant.

### Modes préférés de réalisation de l'invention.

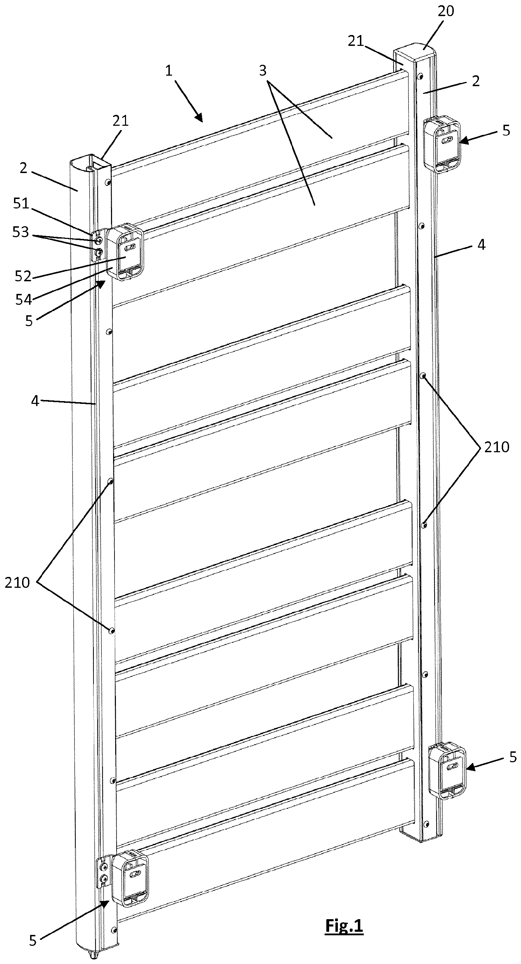

Sur la figure 1, le sèche-serviettes 1 comprend deux montants verticaux 2 parallèles entre lesquels sont disposées des barres de séchage 3.

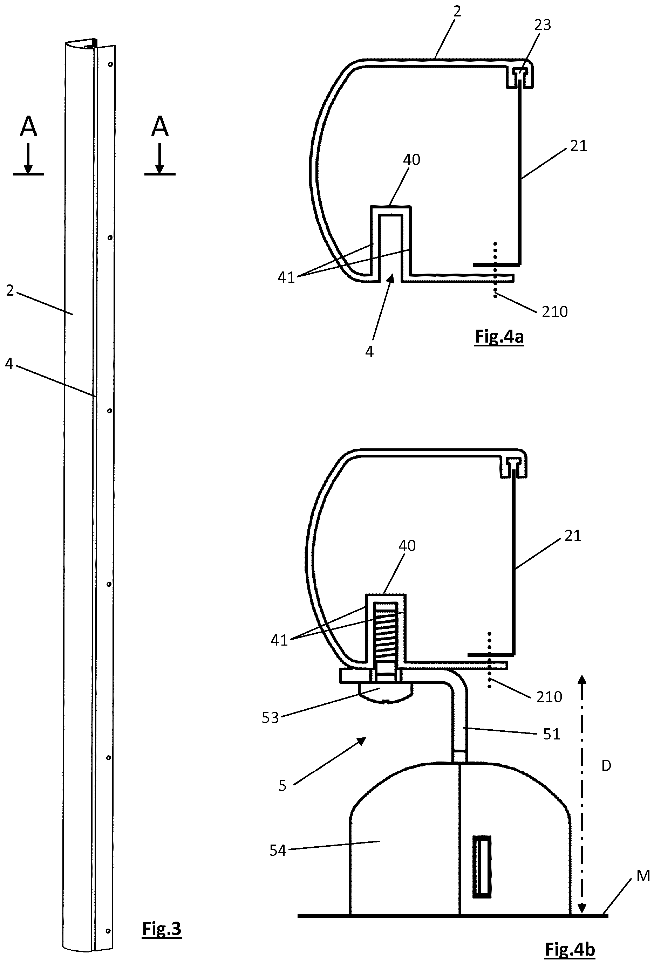

Les montants 2 ont par exemple une longueur comprise entre 20 cm et 2 m. Ils sont réalisés en métal (ex : aluminium) ou en plastique et sont obtenus par extrusion ou par moulage. Sur les figures 3 et 4a, le montant 2 est creux, avec une section en U. Les montants 2 sont installés de sorte que la partie ouverte de leur section en U se font face. Les extrémités supérieure et inférieure des montants 2 sont obturées par des caches 20.

Les barres de séchage 3 ont une section rectangulaire, ovale, ronde, etc. De manière connue de l'homme du métier, elles renferment une résistance électrique ou sont traversées par un fluide caloporteur. Sur les figures annexées, ces barres de séchage 3 sont horizontales et disposées les unes au-dessus des autres. Elles sont fixées de manière classique aux montants 2.

Plus particulièrement, les extrémités des barres 3 s'emboîtent dans des rails plats 21. Ces derniers se positionnent dans les montants 2 de manière à obturer la partie ouverte de leur section en U. Comme cela apparaît sur la figure 4a, leur positionnement est assuré par une gorge longitudinale 23 dans laquelle ledit rail 21 se loge, et leur maintien en position étant assuré par des vis de fixation 210. La technique d'assemblage des barres de séchage 3 sur les montants 2 ne faisant pas partie de la présente invention, elle ne sera pas décrite ici plus en détail.

Chaque montant 2 est pourvu d'un dispositif de fixation murale adapté pour écarter le sèche-serviettes 1 du mur sur lequel il est destiné à être fixé. Dans le mode de réalisation illustré sur les figures 1 à 4a, le dispositif de fixation comprend au moins une glissière longitudinale 4, au moins une fixation murale 5, et un moyen 53 pour bloquer en position cette fixation murale dans cette glissière.

Sur les figures 1, 2 et 3, la glissière 4 est intégrée dans le montant 2 et s'étend sur toute la longueur de ce dernier. Elle est disposée sur la face arrière du montant 2, c'est-à-dire sur la face qui, en usage, est en vis-à-vis du mur. Selon une caractéristique avantageuse de l'invention, le montant 2 et la glissière 4 forment une pièce monobloc obtenue par moulage ou extrusion.

Sur la figure 4a, la glissière 4 présente une section en U, laquelle section est délimitée par une paroi de fond 40 et deux parois latérales 41. Cette glissière 4 est donc borgne, c'est-à-dire qu'elle ne débouche pas dans la partie creuse du montant 2, ce qui simplifie la conception de ce dernier, notamment lorsqu'elle est obtenue par moulage ou extrusion. À titre d'exemple, la glissière 4 a une largeur comprise entre 2 mm et 5 mm, et une profondeur comprise entre 5 mm et 2 cm. Sa longueur correspond à celle du montant 2.

Au moins une fixation murale 5 assure non seulement un maintien en position du sèche-serviettes 1 contre un mur M, mais permet également d'écarter le montant 2 (et donc ledit sèche-serviettes) dudit mur, d'une distance D comprise entre 1 cm et 10 cm. Sur les figures annexées, chaque montant 2 comprend deux fixations murales 5. Pour éviter tout basculement du sèche-serviettes 1 une fois qu'il est installé contre un mur, ces fixations 5 sont préférentiellement maintenues écartées entre-elles d'une distance correspondant environ à celle de la longueur du montant 2. Un écartement compris entre 10 cm et 50 cm est toutefois acceptable.

Chaque fixation murale 5 est adaptée pour se déplacer verticalement dans la glissière 4 à laquelle elle est associée. En pratique, elle coulisse dans - ou sur - cette glissière 4. La position verticale de chaque fixation murale 5 par rapport à cette glissière 4, est donc réglable.

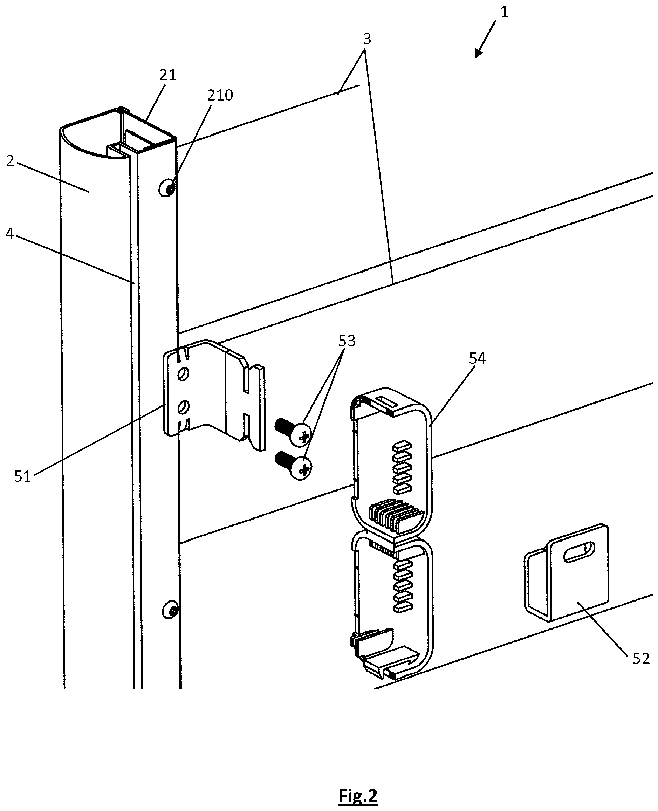

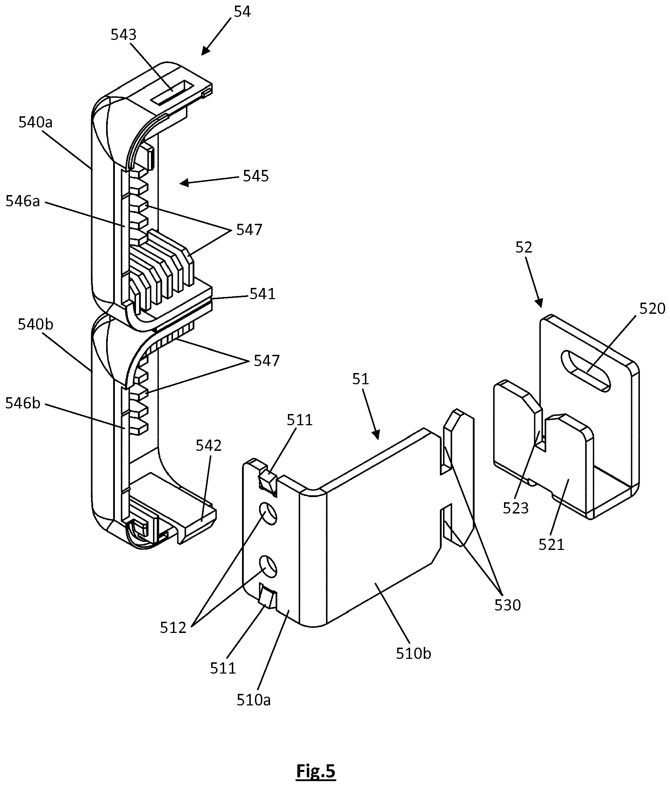

Sur les figures 2 et 5, la fixation murale 5 se compose d'une patte de fixation 51, d'un crochet de fixation murale 52, et d'un cache 54 positionné autour de ladite patte assemblée sur ledit crochet.

La patte de fixation 51 est une patte en équerre, réalisée par exemple en métal ou en plastique. La patte 51 présente une première partie 510a destinée à se déplacer verticalement le long de la glissière 4, et une seconde partie 510b qui est orthogonale à ladite première partie 510a.

Comme cela apparaît sur la figure 5, la patte 51, et plus particulièrement la première partie 510a, présente deux ergots de guidage 511 qui se positionnent dans la glissière 4. Ces ergots 511, lorsqu'ils sont insérés dans la glissière 4, permettent de correctement positionner et guider la patte 51 par rapport à cette dernière.

Au moins une vis 53, préférentiellement deux vis, assure le blocage en position de la patte 51 dans la glissière 4. Ces vis 53 traversent la patte 51 au niveau de perçages 512 réalisés dans la première partie 510a.

Chaque vis 53 est adaptée pour se loger dans la glissière 4 afin de maintenir en position la patte 51 sur ladite glissière. Comme cela apparaît sur la figure 4b, les filets de la vis 53 sont en prise directe avec les parois latérales 41 de la glissière 4. Le diamètre nominal de la vis 53 (c'est-à-dire son diamètre extérieur) est donc légèrement supérieur, par exemple de quelques dixièmes de millimètre, à la distance séparant les deux parois latérales 41. On utilise préférentiellement des vis auto-taraudeuses dont les filets tranchants pénètrent plus facilement dans les parois latérales 41. Le filetage des vis 53 peut être cylindrique ou conique.

Lorsque les vis 53 sont fixées dans la glissière 4, la patte 51 est maintenue en appui serré contre ladite glissière. La tête des vis 53 a avantageusement une face d'appui plane afin d'assurer une bonne mise en pression de la patte 51 contre la glissière 4.

La patte 51 s'assemble sur le crochet 52, et plus particulièrement sur la partie recourbée 521 de ce dernier. Le crochet 52 est adapté pour se fixer contre un mur. Il est réalisé dans le même matériau que la patte 51. Il est avantageusement pourvu d'un trou oblong 520 pour le passage de vis de fixation murale (non représentées). Ce trou oblong 520 est horizontal, de manière à autoriser un débattement latéral du crochet 52 par rapport aux trous de fixation muraux et/ou par rapport à la patte 51.

Sur la figure 5, la seconde partie 510b de la patte 51, comprend une fente verticale 530 qui s'insère dans une fente verticale complémentaire 523 réalisée sur la partie recourbée 521 du crochet 52. La coopération entre les deux fentes 530, 523 est telle que les mouvements transversaux (avant-arrière) et latéraux (gauche-droite) de la patte 51 par rapport au crochet 52 sont bloqués.

Le cache 54 est non seulement utilisé dans un but esthétique pour cacher la patte 51 et le crochet 52, mais également pour bloquer les mouvements longitudinaux (haut-bas) de ladite patte par rapport audit crochet.

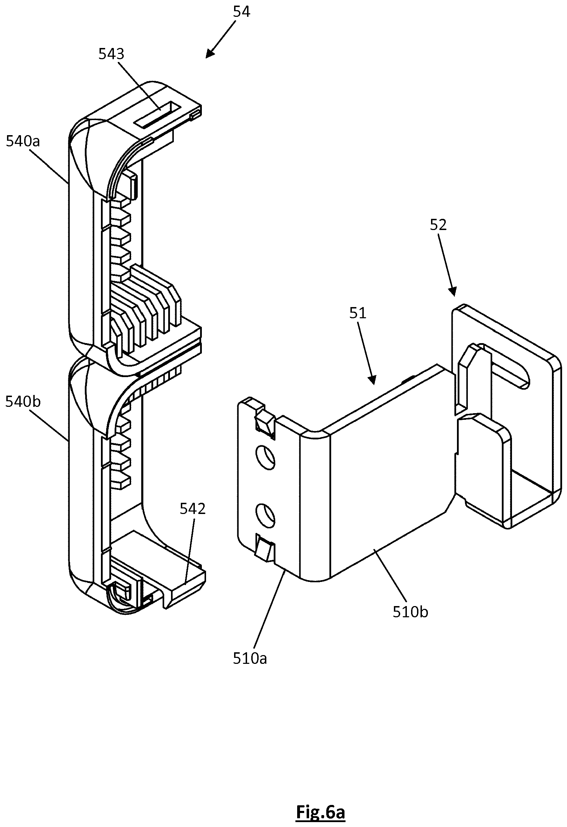

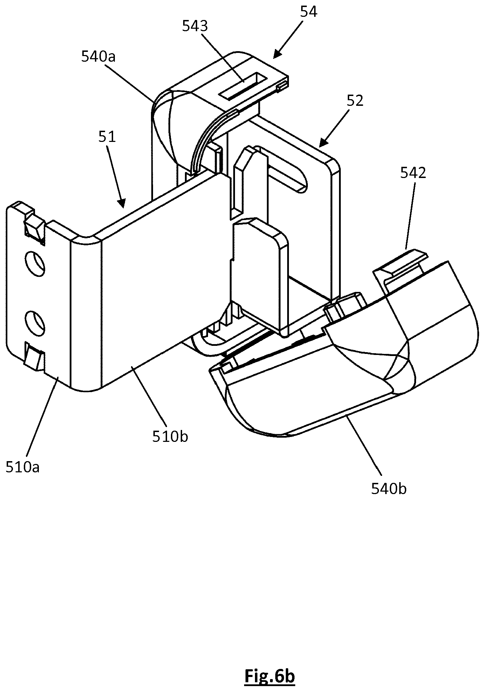

Le cache 54 peut être réalisé en plastique et obtenu par moulage. Sur la figure 5, il est formé de deux demi-coques 540a, 540b articulées autour d'une charnière 541 (figures 6a à 6c). Cette dernière consiste par exemple en une liaison plastique de moindre épaisseur reliant les deux demi-coques 540a, 540b. Celles-ci se verrouillent l'une sur l'autre au moyen d'un ergot 542 solidaire de l'une des demi-coques, par exemple 540b, lequel ergot se clipse dans une rainure 543 réalisée dans l'autre demi-coque, respectivement 540a. Comme cela est expliqué plus avant dans la description, l'utilisation de ces deux demi-coques permet l'installation du cache 54 après que le sèche-serviettes 1 ait été fixé contre le mur.

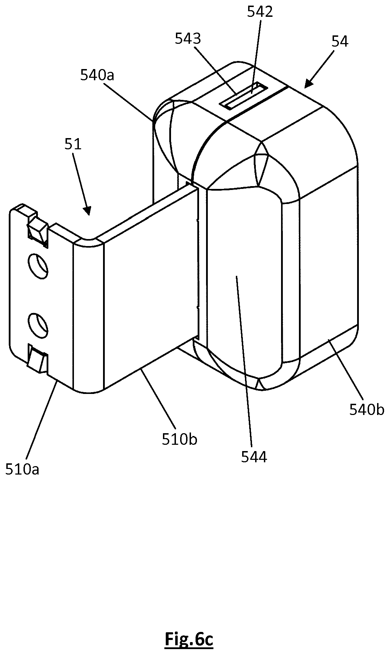

Lorsque les deux demi-coques 540a, 540b sont assemblées entre elles, elles délimitent un logement interne 545 dans lequel est logé l'ensemble patte 51/crochet 52. Lorsque les deux demi-coques 540a et 540b sont assemblées entre elles, le cache 54 présente une face ouverte située en vis-à-vis du mur M (figures 1, 2, 4b) et une face obturée par une paroi 544, laquelle paroi est traversée par la patte 51 (figure 6c). À cet effet, chaque demi-coque 540a, 540b présente une rainure 546a, 546b qui, lorsqu'elles sont juxtaposées, délimitent le passage de la patte 54 au travers de la paroi 544.

Des éléments en saillie 547 sont disposés sur les parois internes des deux demi-coques 540a et 540b. Ces éléments 547 sont agencés de manière à centrer et maintenir le cache 54 en position autour de la patte 51 et du crochet 52. De cette manière, les mouvements longitudinaux de la patte 51 par rapport au crochet 52 sont bloqués.

Dans une variante de réalisation non représentée, la fente verticale 530 de la patte 51 peut simplement s'insérer sur le bord supérieur de la partie recourbée 521 du crochet 52, laquelle partie recourbée est dépourvue de fente. Dans ce cas, la coopération entre la fente 530 et la partie recourbée 521 est telle que seuls les mouvements transversaux de la patte 51 par rapport au crochet 52 sont bloqués. Le débattement latéral de la patte 51 sur le crochet 52 peut faciliter l'assemblage de ladite patte sur ledit crochet, notamment dans le cas où ces deux éléments ne seraient pas correctement alignés l'un en face de l'autre. Le cache 54 est, également dans ce cas, préférentiellement adapté pour bloquer non seulement les mouvements longitudinaux, mais également latéraux, de la patte 51 par rapport au crochet 52.

La fixation du sèche-serviettes 1 contre un mur se fait de la manière suivante : tout d'abord, l'opérateur fixe les crochets 52 sur le mur, dans un endroit qui lui convient, par exemple entre des joints de carrelage. Ensuite, l'opérateur pré-positionne le sèche-serviettes 1 au niveau des crochets 52. Il peut effectuer cette étape en compagnie de l'utilisateur final qui lui indiquera la position adéquate souhaitée. Cela étant fait, l'opérateur déplace les pattes 51 le long des glissières 4 jusqu'à atteindre la position souhaitée. Il met alors en place les vis 53 pour bloquer en position les pattes 51 sur les glissières 4. L'opérateur peut dès lors facilement crocheter les pattes 51 sur les crochets 52. Il ne lui reste plus qu'à mettre en place les caches 54 pour finaliser le montage. On comprend ainsi que la mise en place du sèche-serviettes 1 est très simple et très rapide à mettre en oeuvre. Et si l'utilisateur souhaite descendre ou monter son sèche-serviettes 1, il lui suffit d'enlever les caches 54, de désolidariser ledit sèche-serviettes des crochets 52, et de modifier la position des pattes 51 le long des glissières 4.

Ce dispositif de fixation peut être utilisé pour fixer divers accessoires sur le sèche-serviettes 1. Ces accessoires peuvent par exemple se présenter sous la forme d'une barre de séchage supplémentaire non chauffante, d'une patère, d'une soufflerie, d'un thermostat, etc. Cet accessoire est adapté pour se déplacer verticalement le long de la glissière 4, de sorte que l'utilisateur peut régler sa position. Une ou plusieurs vis du type décrit précédemment se logent dans la glissière 4 et coopère avec cet accessoire pour le maintenir en position sur ladite glissière, les filets de ladite vis étant en prise directe avec les parois latérales 41 de ladite glissière.

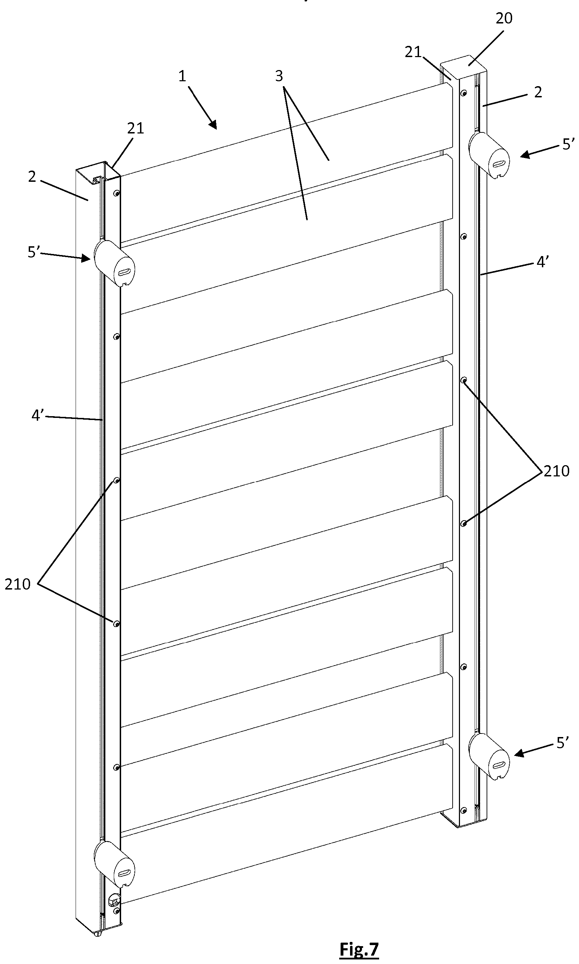

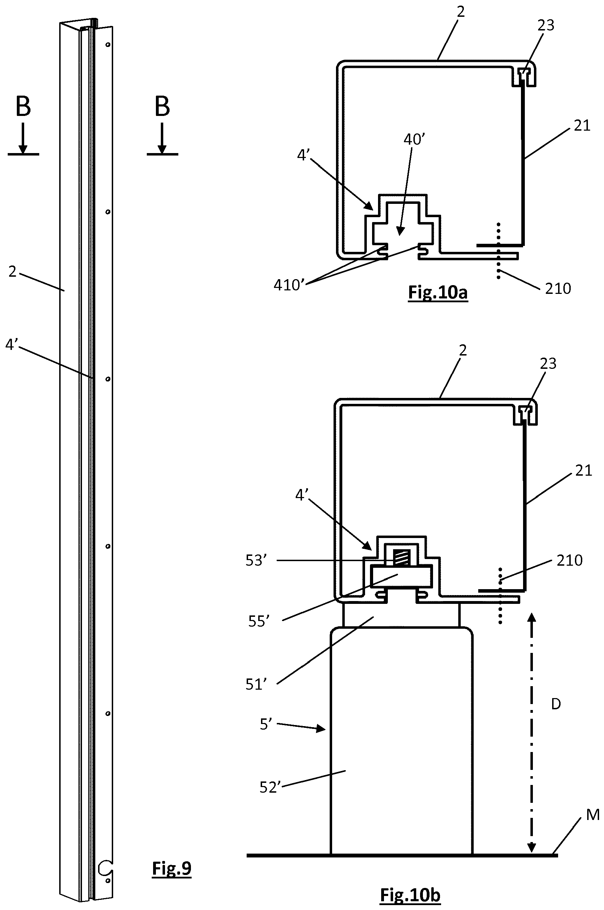

Les figures 7 à 10b illustrent une variante de réalisation. La glissière 4' est du même type que la glissière 4 décrite précédemment. Comme cela apparaît plus clairement sur les figures 10a et 10b, elle présente un rail de guidage 40' longitudinal vertical délimité par des retours en saillie 410' réalisés sur les parois latérales de ladite glissière. Le rail de guidage 40' s'étend tout le long de la glissière 4'.

Un coulisseau 55' est monté mobile en translation dans le rail 40'. Les retours en saillie 410' empêchent le coulisseau 55' de sortir de la glissière 4'. Ce coulisseau 55' se présente sous la forme d'un écrou en métal ou en plastique inséré et maintenu prisonnier dans le rail 40'. Il est taraudé pour recevoir une vis de blocage 53', lequel taraudage est situé en vis-à-vis de l'ouverture de la glissière 4'.

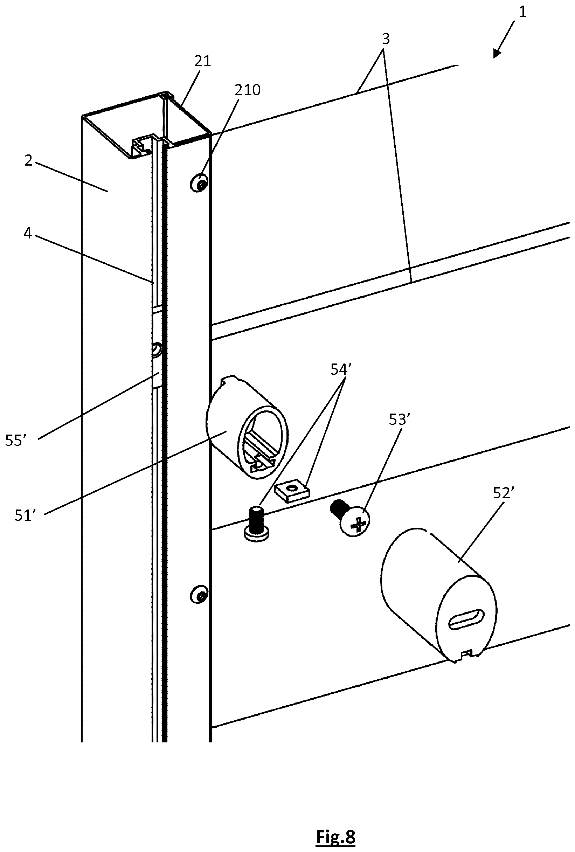

Sur la figure 8, la fixation murale 5' comprend un élément de fixation 51' adapté pour coopérer avec le coulisseau 55'. Cet élément de fixation 51' se présente sous la forme d'un manchon cylindrique, par exemple en plastique. La vis de blocage 53' traverse le manchon 51' et vient se visser dans le taraudage du coulisseau 55' de manière à maintenir ce dernier en appui serré contre la glissière 4'. En dévissant légèrement la vis 53', par exemple d'un quart de tour ou d'un tour, le manchon 51' se desserre, de sorte qu'il est possible de faire coulisser verticalement l'ensemble manchon/coulisseau le long de la glissière 4'. Le blocage en position de cet ensemble se fait en revissant la vis 53'.

La fixation murale 5' comprend également un organe de fixation murale 52'. Sur les figures 7 et 8, cet organe se présente sous la forme d'un manchon cylindrique, par exemple en plastique, qui s'emboîte de manière télescopique sur - ou dans - le manchon 51'. Le manchon 52' se fixe contre le mur de la même manière que le crochet 52 décrit précédemment. Le blocage des deux manchons 52' et 51' entre eux est par exemple réalisé au moyen d'un système vis/écrou 54'. L'emboîtement télescopique des deux manchons permet en outre de régler l'écartement D du montant 2 (et donc du sèche-serviettes 1) par rapport au mur M (figure 10b).

La fixation du sèche-serviettes 1 un contre un mur se fait de la manière suivante : tout d'abord, l'opérateur fixe les manchons 52' sur le mur. Ensuite, l'opérateur pré-positionne le sèche-serviettes 1 au niveau des manchons 51' selon la position adéquate souhaitée. L'opérateur déplace alors les manchons 51' et les coulisseaux 55' le long des glissières 4' jusqu'à atteindre cette position. Il serre les vis 53' pour bloquer en position les manchons 51' sur les glissières 4'. L'opérateur solidarise ensuite les manchons 52' et 51', tout en réglant l'écartement du sèche-serviettes 1 par rapport au mur M. Et si l'utilisateur souhaite descendre ou monter son sèche-serviettes 1, il lui suffit de désolidariser les manchons 52' et 51', et de modifier la position des manchons 51' le long des glissières 4'.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de l'esprit et de la portée de l'invention. En particulier :
- Le sèche-serviettes 1 peut-être de n'importe quelle autre forme, avec un seul montant 2, ou plus de deux montants (trois, quatre, ...).
- Les montants 2 peuvent avoir une section ronde, ovale, rectangulaire, etc.
- Les barres de séchage 3 peuvent être fixées aux montants 2 par toutes autres techniques d'assemblage convenant à l'homme du métier.
- La glissière 4 peut être rapportée sur le montant 2, par vissage, soudage, ou par toute autre technique convenant à l'homme du métier.
- La glissière 4 peut être disposée sur l'une des faces latérales du montant 2, c'est-à-dire sur l'une des faces qui est orthogonale à la face arrière dudit montant.
- A la place d'une glissière 4 d'un seul tenant qui s'étend sur toute la longueur du montant 2, des glissières peuvent être localement disposées à chacune des extrémités haute et basse dudit montant. Dans ce cas, chaque portion de glissière a par exemple une longueur comprise entre 10 cm et 50 cm.
- La glissière 4 peut être débouchante, c'est-à-dire ne pas comporter de paroi de fond 40.
- Selon le type de fixation murale 5 utilisé, on peut prévoir de n'utiliser qu'une seule fixation par montant 2.
- L'élément de fixation 51' peut se présenter sous la forme d'une patte de fixation en équerre, ou de toute autre forme convenant à l'homme du métier. De même, l'organe de fixation murale 52' peut se présenter sous la forme d'un crochet sur lequel se solidarise cette patte de fixation.
- Le dispositif de fixation murale peut être utilisé pour d'autres types d'appareils de chauffage, tels que des radiateurs électriques par exemple. Dans ce cas, la glissière 4, 4' est reliée à cet appareil, que ce dernier présente ou non un montant.

## Revendications

1. Sèche-serviettes comportant au moins un montant vertical (2) sur lequel sont fixées des barres de séchage (3), lequel montant est pourvu d'un dispositif de fixation murale adapté pour écarter ledit sèche-serviettes du mur sur lequel il est destiné à être fixé et adapté pour régler la hauteur dudit sèche-serviettes par rapport audit mur,
**caractérisé en ce que** le dispositif de fixation murale comprend :
- au moins une glissière (4, 4') longitudinale verticale intégrée dans le montant (2),
- au moins une fixation murale (5, 5') adaptée pour se déplacer verticalement le long de la glissière (4, 4') de manière à régler la position verticale du sèche-serviettes,
- un moyen (53, 53') pour bloquer en position la fixation murale (5, 5') dans la glissière (4, 4').

2. Sèche-serviettes selon la revendication 1, dans lequel :
- la glissière (4) présente deux parois latérales (41),
- la fixation murale (5) comprend une patte de fixation (51) adaptée pour se déplacer verticalement le long de la glissière (4),
- le moyen de blocage se présente sous la forme d'au moins une vis (53), qui coopère avec la patte de fixation (5), et qui est adaptée pour se loger dans la glissière (4) afin de maintenir en position ladite patte de fixation sur ladite glissière, les filets de ladite vis étant en prise directe avec les parois latérales (41) de ladite glissière.

3. Sèche-serviettes selon la revendication 2, dans lequel la vis (53) est une vis auto-taraudeuse.

4. Sèche-serviettes selon l'une des revendications 2 ou 3, dans lequel la glissière (3) s'étend sur toute la longueur du montant (2).

5. Sèche-serviettes selon l'une des revendications 2 à 4, dans lequel la fixation murale comprend également un crochet de fixation (52) adapté pour se fixer contre un mur, la patte de fixation (51) s'assemblant sur ledit crochet.

6. Sèche-serviettes selon la revendication 5, dans lequel la patte de fixation (51) comprend une fente verticale (530) adaptée pour coopérer avec une fente verticale complémentaire (523) réalisée sur le crochet (52), de manière à bloquer les mouvements transversaux et latéraux de ladite patte par rapport audit crochet.

7. Sèche-serviettes selon l'une des revendications 5 ou 6, dans lequel un cache (54) est positionné autour de la patte de fixation (51) qui est assemblée sur le crochet (52), lequel cache est adapté pour bloquer en position ladite patte par rapport audit crochet.

8. Sèche-serviettes selon la revendication 7, dans lequel le cache (54) est formé de deux demi-coques (540a, 540b) qui se verrouillent l'une sur l'autre.

9. Sèche-serviettes selon l'une des revendications précédentes, comportant :
- au moins un accessoire adapté pour se déplacer verticalement le long de la glissière (4),
- au moins une vis qui coopère avec cet accessoire, et qui est adaptée pour se loger dans la glissière (4) afin de maintenir en position ledit accessoire sur ladite glissière, les filets de ladite vis étant en prise directe avec les parois latérales (41) de ladite glissière.

10. Sèche-serviettes selon la revendication 1, dans lequel :
- la glissière (4') présente un rail de guidage (40') longitudinal vertical dans lequel un coulisseau (55') est monté mobile en translation,
- la fixation murale (5') comprend un élément de fixation (51') adapté pour coopérer avec le coulisseau (55'),
- le moyen de blocage se présente sous la forme d'au moins une vis (53') qui coopère avec cet élément de fixation, et qui est adaptée pour se visser dans le coulisseau (55') afin de maintenir en position l'élément de fixation (51') sur la glissière (4').

11. Sèche-serviettes selon l'une des revendications précédentes, dans lequel le montant (2) et la glissière (4) forment une pièce monobloc moulée ou extrudée.

12. Sèche-serviettes selon l'une des revendications précédentes, comportant deux montants verticaux (2) entre lesquels sont fixées les barres de séchage (3), chaque montant (2) étant pourvu d'un dispositif de fixation murale, chaque dispositif de fixation mural comprenant :
- une glissière (4, 4') longitudinale verticale intégrée dans le montant (2) auquel ledit dispositif est associé,
- deux fixations murales (5, 5') adaptées pour se déplacer verticalement dans la glissière (4, 4'),
- des moyens (53, 53') pour bloquer en position chaque fixation murale (5, 5') dans ladite glissière.

## Patentansprüche

1. Handtuchheizkörper, der wenigstens eine vertikale Säule (2) umfasst, an der Trocknungsstäbe (3) befestigt sind, wobei die Säule mit einer Mauerbefestigungsvorrichtung versehen ist, die dafür ausgelegt ist, den Handtuchheizkörper von der Mauer, an der er befestigt werden soll, zu beabstanden, und dafür ausgelegt ist, die Höhe des Handtuchheizkörpers in Bezug auf die Mauer einzustellen,
**dadurch gekennzeichnet, dass** die Mauerbefestigungsvorrichtung Folgendes umfasst:
- wenigstens eine vertikale, longitudinale Gleitschiene (4, 4'), die in die Säule (2) integriert ist,
- wenigstens eine Mauerbefestigung (5, 5'), die dafür ausgelegt ist, sich vertikal längs der Gleitschiene (4, 4') zu verlagern, um die vertikale Position des Handtuchheizkörpers einzustellen,
- ein Mittel (53, 53'), um die Position der Mauerbefestigung (5, 5') in der Gleitschiene (4, 4') zu fixieren.

2. Handtuchheizkörper nach Anspruch 1, wobei:
- die Gleitschiene (4) zwei Seitenwände (41) aufweist,
- die Mauerbefestigung (5) eine Befestigungslasche (51) aufweist, die dafür ausgelegt ist, sich vertikal längs der Gleitschiene (4) zu verlagern,
- das Fixiermittel die Form wenigstens einer Schraube (53) aufweist, die mit der Befestigungslasche (5) zusammenwirkt und die dafür ausgelegt ist, in der Gleitschiene (4) aufgenommen zu werden, um die Befestigungslasche an ihrer Position an der Gleitschiene zu halten, wobei die Gewindegänge der Schraube in direktem Eingriff mit den Seitenwänden (41) der Gleitschiene sind.

3. Handtuchheizkörper nach Anspruch 2, wobei die Schraube (53) eine selbstschneidende Schraube ist.

4. Handtuchheizkörper nach einem der Ansprüche 2 oder 3, wobei sich die Gleitschiene (3) über die gesamte Länge der Säule (2) erstreckt.

5. Handtuchheizkörper nach einem der Ansprüche 2 bis 4, wobei die Mauerbefestigung außerdem einen Befestigungshaken (52) umfasst, der dafür ausgelegt ist, an einer Mauer befestigt zu werden, wobei die Befestigungslasche (51) an dem Haken angebracht wird.

6. Handtuchheizkörper nach Anspruch 5, wobei die Befestigungslasche (51) einen vertikalen Schlitz (35) aufweist, der dafür ausgelegt ist, mit einem komplementären vertikalen Schlitz (523), der in dem Haken (52) verwirklicht ist, zusammenzuwirken, derart, dass transversale und seitliche Bewegungen der Lasche in Bezug auf den Haken blockiert werden.

7. Handtuchheizkörper nach einem der Ansprüche 5 oder 6, wobei um die Befestigungslasche (51), die auf dem Haken (52) angebracht ist, eine Abdeckung (54) positioniert wird, wobei die Abdeckung dafür ausgelegt ist, die Position der Lasche in Bezug auf den Haken zu fixieren.

8. Handtuchheizkörper nach Anspruch 7, wobei die Abdeckung (54) durch zwei Halbschalen (540a, 540b), die miteinander verriegelt sind, gebildet ist.

9. Handtuchheizkörper nach einem der vorhergehenden Ansprüche, der Folgendes umfasst:
- wenigstens ein Zubehör, das dafür ausgelegt ist, sich vertikal längs der Gleitschiene (4) zu verlagern,
- wenigstens eine Schraube, die mit diesem Zubehör zusammenwirkt und die dafür ausgelegt ist, in der Gleitschiene (4) aufgenommen zu werden, um die Position des Zubehörs an der Gleitschiene aufrechtzuerhalten, wobei die Gewindegänge der Schraube in direktem Eingriff mit den Seitenwänden (41) der Gleitschiene sind.

10. Handtuchheizkörper nach Anspruch 1, wobei:
- die Gleitschiene (4') eine vertikale, longitudinale Führungsschiene (40') aufweist, in der ein Gleiter (55') translatorisch beweglich montiert ist,
- die Mauerbefestigung (5') ein Befestigungselement (51') aufweist, das ausgelegt ist, mit dem Gleiter (55') zusammenzuwirken,
- das Fixiermittel die Form wenigstens einer Schraube (53') hat, die mit diesem Befestigungselement zusammenwirkt und die dafür ausgelegt ist, in den Gleiter (55') geschraubt zu werden, um das Befestigungselement (51') an seiner Position an der Gleitschiene (4') zu halten.

11. Handtuchheizkörper nach einem der vorhergehenden Ansprüche, wobei die Säule (2) und die Gleitschiene (4) ein formgegossenes oder stranggepresstes Monoblockteil bilden.

12. Handtuchheizkörper nach einem der vorhergehenden Ansprüche, der zwei vertikale Säulen (2) umfasst, zwischen denen Trocknungsstäbe (3) befestigt sind, wobei jede Säule (2) mit einer Mauerbefestigungsvorrichtung versehen ist, wobei jede Mauerbefestigungsvorrichtung Folgendes umfasst:
- eine vertikale, longitudinale Gleitschiene (4, 4'), die in die Säule (2), der die Vorrichtung zugeordnet ist, integriert ist,
- zwei Mauerbefestigungen (5, 5'), die dafür ausgelegt sind, sich in der Gleitschiene (4, 4') vertikal zu verlagern,
- Mittel (53, 53'), um jede Mauerbefestigung (5, 5') an ihrer Position in der Gleitschiene zu fixieren.

## Claims

1. Towel dryer comprising at least one vertical post (2) on which drying bars (3) are fixed, which post is provided with a wall fixing device designed to separate the said tower dryer from the wall on which it is intended to be fixed and designed to adjust the height of the said tower dryer in relation to the said wall, **characterized in that** the wall fixing device comprises:
- at least one vertical longitudinal slideway (4, 4') integrated into the post (2),
- at least one wall fixing (5, 5') designed to move vertically along the slideway (4, 4') so as to adjust the vertical position of the tower dryer,
- a means (53, 53') for blocking the wall fixing (5, 5') in position in the slideway (4, 4').

2. Tower dryer according to Claim 1, in which:
- the slideway (4) has two lateral walls (41),
- the wall fixing (5) comprises a fixing bracket (51) designed to move vertically along the slideway (4),
- the blocking means takes the form of at least one screw (53) which cooperates with the fixing bracket (5) and which is designed to be housed in the slideway (4) in order to keep the said fixing bracket in position on the said slideway, the threads of the said screw being in direct engagement with the lateral walls (41) of the said slideway.

3. Towel dryer according to Claim 2, in which the screw (53) is a self-tapping screw.

4. Towel dryer according to either of Claims 2 and 3, in which the slideway (3) extends over the whole length of the post (2).

5. Towel dryer according to one of Claims 2 to 4, in which the wall fixing also comprises a fixing hook (52) designed to be fixed against a wall, the fixing bracket (51) being assembled on the said hook.

6. Towel dryer according to Claim 5, in which the fixing bracket (51) comprises a vertical slot (530) designed to cooperate with a complementary slot (523) formed in the hook (52) so as to block the transverse and lateral movements of the said bracket with respect to the said hook.

7. Towel dryer according to either of Claims 5 and 6, in which a cover cap (54) is positioned around the fixing bracket (51) which is assembled on the hook (52), which cover cap is designed to block the said bracket in position with respect to the said hook.

8. Towel dryer according to Claim 7, in which the cover cap (54) is formed from two half-shells (540a, 540b) which lock onto one another.

9. Towel dryer according to one of the preceding claims, comprising:
- at least one accessory designed to move vertically along the slideway (4),
- at least one screw which cooperates with this accessory and which is designed to be housed in the slideway (4) in order to keep the said accessory in position on the said slideway, the threads of the said screw being in direct engagement with the lateral walls (41) of the said slideway.

10. Towel dryer according to Claim 1, in which:
- the slideway (4') has a vertical longitudinal guide rail (40') in which a slider (55') is translatably mounted,
- the wall fixing (5') comprises a fixing element (51') designed to cooperate with the slider (55'),
- the blocking means takes the form of at least one screw (53') which cooperates with this fixing element and which is designed to be screwed into the slider (55') in order to keep the fixing element (51') in position on the slideway (4').

11. Towel dryer according to one of the preceding claims, in which the post (2) and the slideway (4) form a moulded or extruded one-piece part.

12. Towel dryer according to one of the preceding claims, comprising two vertical posts (2) between which the drying bars (3) are fixed, each post (2) being provided with a wall fixing device, each wall fixing device comprising:
- a vertical longitudinal slideway (4, 4') integrated into the post (2) with which the said device is associated,
- two wall fixings (5, 5') designed to move vertically in the slideway (4, 4'),
- means (53, 53') for blocking each wall fixing (5, 5') in position in the said slideway.
